# EUROPEAN PATENT APPLICATION

(11) **EP 4 668 845 A1**
(43) Date of publication of application: **24.12.2025**
(21) Application number: 23921830.8
(22) Date of filing: 16.02.2023
(51) Int. Cl.: H04W 28/06

(54) **DATA PROCESSING METHOD AND APPARATUS**

(71) Applicant: FUJITSU LIMITED, Kawasaki-shi, Kanagawa 211-8588 (JP)
(72) Inventor: YI, Su, Beijing 100022 (CN); JIA, Meiyi, Beijing 100022 (CN); LI, Guorong, Beijing 100022 (CN)
(74) Representative: Haseltine Lake Kempner LLP
(86) International application number: PCT/CN2023/076416
(87) International publication number: WO 2024/168672

(57) **Abstract**

Embodiments of the present disclosure provide a data processing method and apparatus, the method comprising: a terminal equipment discards all PDCP SDUs in a PDU Set and their corresponding PDCP data PDUs or deems that discard timers for all PDCP SDUs belonging to the PDU Set expire in a case where at least one of the following conditions associated with the PDU Set is satisfied; these conditions includes that: a discard timer corresponding to a PDCP SDU expires, and the PDCP SDU belongs to the PDU Set; a discard timer corresponding to the PDU Set expires; a PDCP SDU belonging to the PDU Set is not confirmed by a PDCP status report as being successfully delivered, and a PSII of the PDU Set is configured; and a PDCP layer of the terminal equipment receives an indication that a PDCP data PDU exceeds a maximum number of transmissions, a SDU corresponding to the PDCP data PDU belongs to the PDU Set, and the PDU Set is configured with a PSII. According to one aspect of the embodiments of the present disclosure, integrity of a PDU Set or validity of its contents is guaranteed, and network resources are saved.

## Description

### FIELD

The present disclosure relates to the field of communication.

### BACKGROUND

3GPP (3rd Generation Partnership Project) begins to study enhancements for eXtended Reality (XR) service in Release 18 (version), and the XR service refers to environment and human-computer interaction of all real and virtual combinations produced by computer technologies and wearable devices. Its application fields include but are not limited to entertainment, healthcare, education, etc. The XR service may include virtual reality (VR) service, augmented reality (AR) service and mixed reality (MR) service.

Virtual reality is a rendered version of a released visual and an audio scenario. When an observer or user moves within limitations defined by an application program, rendering aims to simulate visual and auditory sensory stimuli in the real world as naturally as possible. Augmented reality refers to providing a user with additional information or artificially generated items, or content overlaid on its current environment. Mixed reality is an advanced form of AR, in which some virtual elements are inserted into a physical scenario, with the aim of providing an illusion that makes people feel these elements are a part of a real scenario.

A PDU Set consists of one or more PDUs (Protocol Data Units), these PDUs carry a payload of an information unit generated at an application layer (for example, a frame or video slice for XR and media services). In some implementations, the application layer requires all PDUs in the PDU Set to use corresponding information units. In other implementations, when some PDUs are lost, the application layer may still recover all or part of the information units. It should be noted that the PDU here refers to an application-level PDU, that is, a PDU in a PDU session layer, generally referring to an IP packet or an Ethernet frame. In each protocol stack of an AS (access stratum), there are corresponding PDUs for each sub-layer, such as a PDCP PDU (packet data convergence protocol PDU), an RLC PDU (radio link control PDU), etc.

It should be noted that the above introduction to the technical background is just to facilitate a clear and complete description of the technical solutions of the present disclosure, and is elaborated to facilitate understanding of persons skilled in the art. It cannot be considered that these technical solutions are known by persons skilled in the art just because these solutions are elaborated in the Background of the present disclosure.

### SUMMARY

The inventor finds that in order to solve a processing demand of a PDU Set, at present, enhancements of a control plane and a user plane are proposed for downlink data transmission. In downlink transmission, for how to utilize the above-mentioned enhancement information, needs to be further standardized and technical implemented. In addition, for uplink transmission, currently there is no technology that can solve integrated packet handling of the PDU Set and differentiated handling of the PDU Set, including how to perform PDU Set data discarding.

For at least one of the above problems or other similar problems, the embodiments of the present disclosure provide a data processing method and apparatus.

According to an aspect of the embodiments of the present disclosure, a data processing apparatus is provided, configured in a terminal equipment, the apparatus comprising:
a processing unit configured to discard all PDCP SDUs in a PDU Set and their corresponding PDCP data PDUs or deem that discard timers for all PDCP SDUs belonging to the PDU Set expire in a case where at least one of the following conditions associated with the PDU Set is satisfied that:
a discard timer corresponding to a PDCP SDU expires, and the PDCP SDU belongs to the PDU Set;
a discard timer corresponding to the PDU Set expires;
a PDCP SDU belonging to the PDU Set is not confirmed by a PDCP status report as being successfully delivered, and a PSII of the PDU Set is configured; and
a PDCP layer of the terminal equipment receives an indication that a PDCP data PDU exceeds a maximum number of transmissions, a SDU corresponding to the PDCP data PDU belongs to the PDU Set, and the PDU Set is configured with a PSII.

According to another aspect of the embodiments of the present disclosure, a data processing apparatus is provided, configured in a transmitting device, the transmitting device being a terminal equipment or a network device, the apparatus comprises:
a transmitting unit configured to, after the transmitting device discards all PDCP SDUs corresponding to a PDU Set, transmit sequence number information of PDCP SDUs in the PDCP SDUs that have associated with PDCP sequence numbers to a receiving device.

According to a further aspect of the embodiments of the present disclosure, a data processing apparatus is provided, configured in a receiving device, the receiving device being a network device or a terminal equipment, the apparatus comprises:
a first processing unit configured to, after the receiving device receives sequence number information of discarded PDCP SDUs, save or record the sequence number information of the discarded PDCP SDUs; and
a second processing unit configured to deliver the stored PDCP SDUs to a higher layer according to the sequence number information of the discarded PDCP SDUs.

One of advantageous effects of the embodiments of the present disclosure lies in that according to the embodiments of the present disclosure, on the one hand, the problem of data discarding of the PDU Set in a wireless access network is solved, XR and media service applications may be supported better. On the other hand, a discard report is introduced, and by enhancing a transmitting side and a receiving side, the problem of a sequence number gap caused by data discarding is solved, reordering delay is reduced, thereby the transmission performance of the XRM service is improved. Thereby, differentiated handling of the PDU Set may be guaranteed, and an integrated data handling demand of the PDU Set may be satisfied.

Referring to the later description and drawings, specific implementations of the present disclosure are disclosed in detail, indicating a mode that the principle of the present disclosure may be adopted. It should be understood that the implementations of the present disclosure are not limited in terms of a scope. Within the scope of the terms of the attached claims, the implementations of the present disclosure include many changes, modifications and equivalents.

Features that are described and/or illustrated with respect to one implementation may be used in the same way or in a similar way in one or more other implementations and in combination with or instead of the features in the other implementations.

It should be emphasized that the term "comprise/include" when being used herein refers to presence of a feature, a whole piece, a step or a component, but does not exclude presence or addition of one or more other features, whole pieces, steps or components.

### BRIEF DESCRIPTION OF THE DRAWINGS

An element and a feature described in a drawing or an implementation of the embodiments of the present disclosure may be combined with an element and a feature shown in one or more other drawings or implementations. In addition, in the drawings, similar labels represent corresponding components in several drawings and may be used to indicate corresponding components used in more than one implementation.

The included drawings are used to provide a further understanding on the embodiments of the present disclosure, constitute a part of the Specification, are used to illustrate the implementations of the present disclosure, and expound the principle of the present disclosure together with the text description. Obviously, the drawings in the following description are only some embodiments of the present disclosure. Persons skilled in the art may further obtain other drawings according to these drawings under the premise that they do not pay inventive labor. In the drawings:
FIG. 1 is a schematic diagram of a data processing method in the embodiments of the present disclosure;
FIG. 2 is another schematic diagram of a data processing method in the embodiments of the present disclosure;
FIG. 3 is a schematic diagram of an example of a format for a PDCP discard report;
FIG. 4 is a further schematic diagram of a data processing method in the embodiments of the present disclosure;
FIG. 5 to FIG. 8 are schematic diagram of several examples of a size relationship between "a third state variable and a fourth state variable" and "a first state variable and a second state variable";
FIG. 9 is a schematic diagram of a data processing apparatus in the embodiments of the present disclosure;
FIG. 10 is another schematic diagram of a data processing apparatus in the embodiments of the present disclosure;
FIG. 11 is a further schematic diagram of a data processing apparatus in the embodiments of the present disclosure;
FIG. 12 is a schematic diagram of a terminal equipment in the embodiments of the present disclosure;
FIG. 13 is a schematic diagram of a network device in the embodiments of the present disclosure.

### DETAILED DESCRIPTION

Referring to the drawings, through the following Specification, the aforementioned and other features of the present disclosure will become obvious. The Specification and the drawings specifically disclose particular implementations of the present disclosure, showing partial implementations which may adopt the principle of the present disclosure. It should be understood that the present disclosure is not limited to the described implementations, on the contrary, the present disclosure includes all the modifications, variations and equivalents falling within the scope of the attached claims.

In the embodiments of the present disclosure, the term "first" and "second", etc. are used to distinguish different elements in terms of appellation, but do not represent a spatial arrangement or time sequence, etc. of these elements, and these elements should not be limited by these terms. The term "and/or" includes any and all combinations of one or more of the associated listed terms. The terms "include", "comprise" and "have", etc. refer to the presence of stated features, elements, members or components, but do not preclude the presence or addition of one or more other features, elements, members or components.

In the embodiments of the present disclosure, the singular forms "a/an" and "the", etc. include plural forms, and should be understood broadly as "a kind of" or "a type of", but are not defined as the meaning of "one"; in addition, the term "the" should be understood to include both the singular forms and the plural forms, unless the context clearly indicates otherwise. In addition, the term "according to" should be understood as "at least partially according to......", the term "based on" should be understood as "at least partially based on......", unless the context clearly indicates otherwise.

In the embodiments of the present disclosure, the term "a communication network" or "a wireless communication network" may refer to a network that meets any of the following communication standards, such as Long Term Evolution (LTE), LTE- Advanced (LTE-A), Wideband Code Division Multiple Access (WCDMA), High-Speed Packet Access (HSPA) and so on.

And, communication between devices in a communication system may be carried out according to a communication protocol at any stage, for example may include but be not limited to the following communication protocols: 1G (generation), 2G, 2.5G, 2.75G, 3G, 4G, 4.5G, and future 5G, New Radio (NR) and so on, and/or other communication protocols that are currently known or will be developed in the future.

In the embodiments of the present disclosure, the term "a network device" refers to, for example, a device that accesses a terminal equipment in a communication system to a communication network and provides services to the terminal equipment. The network device may include but be not limited to the following devices: a Base Station (BS), an Access Point (AP), a Transmission Reception Point (TRP) node, a broadcast transmitter, a Mobile Management Entity (MME), a gateway, a server, a Radio Network Controller (RNC), a Base Station Controller (BSC) and so on.

The base station may include but be not limited to: a node B (NodeB or NB), an evolution node B (eNodeB or eNB) and a 5G base station (gNB), etc., and may further includes a Remote Radio Head (RRH), a Remote Radio Unit (RRU), a relay or a low power node (such as femto, pico, etc.). And the term "base station" may include some or all functions of a base station, each base station may provide communication coverage to a specific geographic region. The term "cell" may refer to a base station and/or its coverage area, which depends on the context in which this term is used.

In the embodiments of the present disclosure, the term "a User Equipment (UE)" refers to, for example, a device that accesses a communication network and receives network services through a network device, or may also be called "Terminal Equipment (TE)". The terminal equipment may be fixed or mobile, and may also be called a Mobile Station (MS), a terminal, a user, a Subscriber Station (SS), an Access Terminal (AT) and a station and so on.

The terminal equipment may include but be not limited to the following devices: a Cellular Phone, a Personal Digital Assistant (PDA), a wireless modem, a wireless communication device, a handheld device, a machine-type communication device, a laptop computer, a cordless phone, a smart phone, a smart watch, a digital camera, or may be an IAB-MT, and so on.

For another example, under a scenario such as Internet of Things (IoT), the terminal equipment may also be a machine or apparatus for monitoring or measurement, for example may include but be not limited to: a Machine Type Communication (MTC) terminal, a vehicle-mounted communication terminal, a Device to Device (D2D) terminal, a Machine to Machine (M2M) terminal and so on.

At present, 5G technology is studying key issues, solutions and conclusions for supporting advanced media services, such as High Data Rate Low Latency (HDRLL) service, AR/VR/XR services and tactile/multimodal communication services. Goals include:
1. Supporting an enhanced function of a multi-mode service, including:
   - studying whether and how to enable an application program to provide users with relevant tactile and multi-mode data (such as audio, video and tactile data related to a specific time) at similar time, with a focus on a demand for enhanced policy control (such as QoS policy coordination).
2. Enhancing network exposure to support interaction between 5GS (a 5G system) and an application program, including:
   - studying whether and how to perform application synchronization and QoS (Quality of Service) policy coordination among multiple UEs or multiple QoS flows of each UE, and how to interact between AF and 5GS.
   - studying exposure of 5GS QoS information (such as QoS capabilities) and network conditions to an application program to achieve fast codec/rate adaptation, which helps to provide required QoE (for example, helping to alleviate 5GS congestion).
3. Studying whether and how to perform the following QoS and policy enhancements for XR service and media service transmission, including:
   - studying traffic characteristics of media services that can improve network resource utilization rate and QoE (Quality of Experience).
   - enhancing a QoS framework to support PDU Set granularity (such as a video/audio frame/tile, an application data unit, control information), wherein the PDU Set consists of PDUs with the same QoS requirements.
   - by taking into account different importance of PDU Sets, supporting differentiated QoS processing. For example, a packet belonging to a less important PDU Set is legally discarded to reduce resource waste.
   - whether and how to support uplink-downlink transmission coordination to meet a RTT (Round Trip Time) delay requirement between N6 termination points from a UE to a UPF (User Plane Function).
   - potential policy enhancements to reduce jitter to the greatest extent, with a focus on demand supply from an AF (Application Function) and expansion of a PCC (policy and charging control) rule.

The inventor finds that a PDU Set has different QoS demands, such as priority, importance, etc. Existing QoS models based on QoS flows cannot support different QoS demands of the PDU Set. Specifically, there are two major demands for processing of the PDU Set: integrated packet handling of the PDU Set, and differentiated handling of the PDU Set.

For the integrated packet handling of the PDU Set, in the current 5GS, the QoS flow is the finest granularity for QoS differentiation in PDU sessions. A 5G QoS characteristic is determined by a 5QI (5G QoS Identifier). This means that each packet in the QoS flow is handled according to the same QoS requirement.

For XR/media services, a group of packets is used to carry payloads (for example, frames, video slices/tiles) of the PDU Set. At a media layer, packets in such a PDU Set are decoded/processed as a whole. For example, a frame/video slice may be decoded only when all or a certain number of packets carrying the frame/video slice are successfully delivered. For example, only when all the frames on which the frame depends are successfully received, a client may decode frames in a GOP (group of pictures). Therefore, there are inherent interdependence in the media layer for packet groups in the PDU Set. If this dependency relationship between packets in the PDU Set is not taken into account, 5GS may perform scheduling with low efficiency. For example, 5GS might randomly discard one or more packets, but will attempt to deliver other packets in the same PDU Set, which are useless to a client, thus wasting radio resources.

For the differentiated handling of the PDU Set, features of XR/ media services lie in a high data rate and low latency. In Rel-18 version, it is expected that a 5GS QoS framework will be enhanced to support different QoS processing of a PDU Set. The PDU Set may carry different contents, such as I/B/P frames, slices/tiles in the I/B/P frames, etc. This key issue proposes to support differentiated QoS processing, considering different importance of the PDU Set, for example, resource waste is reduced by differentially treating packets (i.e, PDUs) belonging to a less important PDU Set.

In order to solve a processing demand of a PDU Set, at present, enhancements of a control plane and a user plane are proposed for downlink data transmission.

The control plane enhancement includes defining the following PDU Set QoS parameters:
a PDU Set Error Rate (PSER), which refers to an upper limit value of a proportion of PDU Sets that have been processed by a transmitting side of a link layer protocol (such as RLC in RAN accessed by 3GPP) but have not been successfully delivered to an upper layer of a corresponding receiving side (such as PDCP in the RAN accessed by 3GPP);
a PDU Set Delay Budget (PSDB), which defines an upper limit of a delay that a PDU Set may undergo in transmission between a UE and a N6 termination point of a UPF (that is, a time from when the first PDU in a PDU Set is received to when the last arrived PDU in the PDU Set is successfully delivered);
a PDU Set Integrated Indication (PSII), which indicates whether an application layer needs all PDUs in order to use a PDU Set.

Furthermore, the user plane enhancement includes the following information related to identifying the PDU Set by a UPF: a PDU Set sequence number, the last PDU mark of the PDU Set, a PDU sequence number inside the PDU Set, size of the PDU Set, and a PDU Set Importance.

The inventor finds that in downlink transmission, for how to utilize the above-mentioned enhancement information, it needs to be further standardized and technical implemented. And for uplink transmission, currently there is no technology that can solve integrated packet handling of the PDU set and differentiated handling of the PDU Set, including how to perform PDU Set data discarding.

In addition, for uplink traffic, a NAS (non-access stratum) of a UE may identify information related to the PDU Set. Similar to downlink traffic, these PDU Set-related information may include a PDU Set identifier, a PDU sequence number inside the PDU Set, a PDU Set Importance, and optionally, it may further include start and/or end markers of the PDU Set, size of the PDU Set, etc. The PDU Set Importance indicates a level of importance or priority of a PDU Set in an XRM (XR and multimedia) service flow, for example it may be high, medium, low, or expressed in numbers ranging from 0 to Nmax, which is used for differentiated handling of the PDU Set in RAN, such as priority handling, scheduling, data discarding, etc.

Moreover, for classification of upstream packets, during establishment/modification of a PDU session, a PDU Set Importance may be prepared for a UE according to S-NSSAI/DNN (Single Network Slice Selection Assistance Information/Data Network Name) of the PDU session. A PDU Set Importance rule may be transmitted to the UE from a 5GC (5G Core Network) via a N1 SM container defined in a session management process. The PDU Set Importance may be used by the UE to map the PDU Set to an appropriate MAC (medium access control) transport buffer. If the PDU Set Importance is used for mapping of a QoS flow or sub-QoS flow, the UE classifies and marks uplink user plane traffic according to QoS rules, i.e., association of uplink traffic of XRM with the QoS flow and/or sub-QoS flow.

In the present disclosure, it is considered that discarding and relevant operations for a PDU Set are performed at a PDCP (Packet Data Convergence Protocol) layer. For uplink transmission, the PDCP layer needs to know relevant information of an uplink data PDU Set. The information may be determined by UE implementation. That is, after an upper layer of the UE identifies PDU Set-related information, such information is delivered to the PDCP layer via an internal interface; it is also possible for the UE to deliver said information to the PDCP layer by adding the PDU Set-related information into an uplink data header of a SDAP (Service Data Adaptation Protocol) layer.

Various implementations of the present disclosure will be described below with reference to the drawings. These implementations are exemplary only and are not limitations to the present disclosure. In the following description, "if...", "in a case where..." and "when...", etc. have the same meaning, and may be interchangeable. In addition, in the following description, unless otherwise specified, the PDU refers to a PDU in a PDU session.

### Embodiments of a first aspect

In the related arts, a data discarding function of a PDCP layer is for a PDCP SDU (service data unit). A transmitting PDCP entity maintains a discard timer (discardTimer) for each PDCP SDU. The discard timer is configured only for a DRB (data radio bearer). A duration of the timer (i.e., an initial value when the timer is started) is configured by a higher layer (RRC, radio resource control). At a data transmitting side, when the PDCP layer receives an SDU from an upper layer, a new discard timer is started. When a discard timer for a certain PDCP SDU expires, or when a certain PDCP SDU is confirmed to be successfully delivered via a PDCP status report, the transmitting PDCP entity needs to discard the PDCP SDU and corresponding PDCP data PDU.

Generally, a PDU Set has certain content criterion, the content criterion refers to a standard for determining whether a PDU Set may be regarded as successfully delivered. For example, if a certain PDU Set is configured with a PSII (indicating that a PDU Set integrity indication is true), this PDU Set is useful to a receiving side only in a case where all bits are delivered correctly, that is, any error cannot be tolerated. In this way, if a certain PDU Set is configured with a PSII, when it is confirmed that a PDU is not successfully delivered, the PDU Set to which the PDU belongs may be discarded.

In the embodiments of the present disclosure, since the PDU Set generally has the same arrival time requirements, it may be considered to discard the PDU Set as a whole, or, in the case where a PSII is configured, a transmitting side may discard a PDU Set in which it is confirmed that there is a PDU that fails to be delivered successfully.

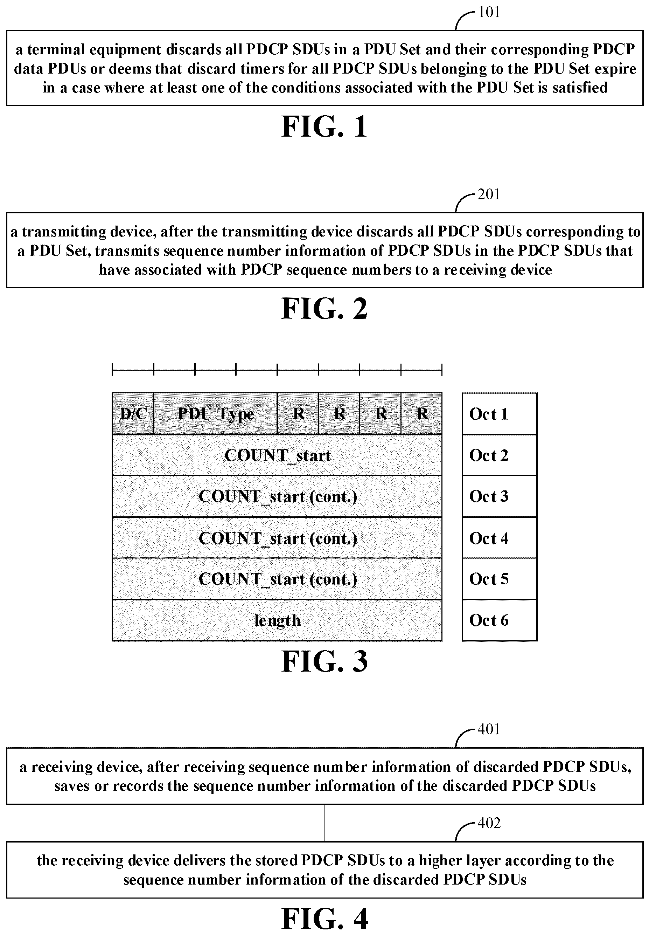

For at least one of the above problems, embodiments of the present disclosure provide a data processing method, which is described from a terminal equipment side. FIG. 1 is a schematic diagram of a data processing method in the embodiments of the present disclosure. As shown in FIG. 1, the method includes:
101: a terminal equipment discards all PDCP SDUs in a PDU Set and their corresponding PDCP data PDUs or deems that discard timers for all PDCP SDUs belonging to the PDU Set expire in a case where at least one of the following conditions associated with the PDU Set is satisfied, these conditions including:
a discard timer corresponding to a PDCP SDU expires, and the PDCP SDU belongs to the PDU Set;
a discard timer corresponding to the PDU Set expires;
a PDCP SDU belonging to the PDU Set is not confirmed by a PDCP status report as being successfully delivered, and a PSII of the PDU Set is configured; and
a PDCP layer of the terminal equipment receives an indication that a PDCP data PDU exceeds a maximum number of transmissions, a SDU corresponding to the PDCP data PDU belongs to the PDU Set, and the PDU Set is configured with a PSII.

It should be noted that the above FIG. 1 only schematically describes the embodiments of the present disclosure, but the present disclosure is not limited to this. For example, other some operations can be increased. Persons skilled in the art may make appropriate modifications according to the above contents, not limited to the records in the above FIG. 1.

According to the above embodiments, data discarding is performed by taking into account the content criterion, integrity of a PDU Set or validity of its contents is guaranteed, and network resources are saved.

In some embodiments, when a discard timer corresponding to a certain PDCP SDU expires and the PDCP SDU belongs to a PDU Set (of an application layer), a transmitting PDCP entity of the terminal equipment discards all PDCP SDUs belonging to the PDU Set and their corresponding PDCP data PDUs.

In the above embodiments, when the terminal equipment performs uplink transmission, each PDCP SDU still uses a separate discard timer, and for an initial value, a startup method, etc. of the discard timer, relevant technologies may be referred to, description is omitted here.

According to the above embodiments, description of TS 38.323 may be enhanced. For example, TS 38.323 may include the following description:

| |
|---|
| When the *discardTimer* expires for a PDCP SDU and this PDCP SDU belongs to an (application level) PDU Set, the transmitting PDCP entity shall discard all the PDCP SDUs belonging to this (application level) PDU Set along with the corresponding PDCP Data PDUs. |

In some embodiments, when a discard timer corresponding to a certain PDCP SDU expires and the PDCP SDU belongs to a PDU Set (of an application layer), discard timers for all PDCP SDUs belonging to the PDU Set are deemed to expire. That is, the terminal equipment deems that discard timers for all PDCP SDUs belonging to the PDU Set expire.

In some embodiments, when a discard timer corresponding to a certain PDU Set expires, a transmitting PDCP entity of the terminal equipment discards all PDCP SDUs belonging to the PDU Set and their corresponding PDCP data PDUs.

In the above embodiments, PDUs belonging to the same PDU Set (i.e., PDCP SDUs) share the same discard timer. That is, the transmitting PDCP entity of the terminal equipment maintains a discard timer for each PDU Set. Duration of the discard timer may be configured according to a PSDB or may be configured by a network device, the present disclosure does not impose any restrictions on this.

In the above embodiments, when the transmitting PDCP entity of the terminal equipment receives a PDCP SDU from a higher layer, if the PDCP SDU belongs to an application-level PDU Set, that is, it is a PDU in the PDU Set, or is associated with a certain PDU Set, and the PDCP SDU is a first PDU in the PDU Set, such as a PDU with a first PDU sequence number, a PDU sequence number of the first PDU is e.g. 0, the transmitting PDCP entity of the terminal equipment starts a discard timer (if configured) associated with the PDU Set.

Thereby, when a discard timer associated with or corresponding to a certain PDU Set expires, the transmitting PDCP entity discards all PDCP SDUs belonging to the PDU Set and their corresponding PDCP data PDUs.

According to the above embodiments, description of TS 38.323 may be enhanced. For example, TS 38.323 may include the following description:

| |
|---|
| At reception of a PDCP SDU from upper layers, the transmitting PDCP entity shall: |
| - start the *discardTimer* associated with this PDCP SDU (if configured), or if this PDCP SDU belongs to an application level PDU Set and it has the first PDU SN within this PDU Set, start the *discardTimer* associated with this PDU Set (if configured). |

In each of the above embodiments, transmission delay of the PDU Set is considered as a whole, thereby meeting a PSDB demand of the PDU Set.

In some further embodiments, the terminal equipment may determine whether to perform PDCP Set discarding according to a PDCP status report.

In the above embodiments, the PDU Set has certain content criterion, i.e., a standard for determining whether a PDU Set may be regarded as successfully delivered.

For example, if a certain PDU Set is configured with a PSII (indicating that a PDU Set integrity indication is true), this PDU Set is useful to a receiving side only in a case where all bits are delivered correctly, that is, any error cannot be tolerated. In this way, if a certain PDU Set is configured with a PSII, when it is confirmed that a PDU is not successfully delivered, the PDU Set to which the PDU belongs may be discarded.

For another example, a PDU Set may be configured with a PDU Set content ratio for indicating that the PDU Set is useful to the receiving side only when X% bits of the PDU Set is delivered correctly, where X is a PDU Set content ratio. A scenario for this situation is that an application layer uses FEC (Forward Error Correction) on a PDU Set, which may tolerate an error rate of 1-X%. In this way, if the PDU Set is configured with a content ratio, when it is confirmed that the number of PDUs not successfully delivered (or lost) in the PDU Set exceeds a certain threshold (called a first threshold, for example, the first threshold = the number of PDUs in the PDU Set * (1-X%)), the PDU Set may be discarded.

From another perspective, it may further be determined according to the number of PDUs that has been successfully delivered. If the PDU Set is configured with the content ratio X and it is confirmed that the number of PDUs that have been successfully delivered exceeds a certain threshold (called a second threshold, for example, the second threshold = the number of PDUs in the PDU Set * X%), the transmitting side may discard this PDU Set, that is, there is no need to transmit the remaining PDUs, which saves network resources.

In the above embodiments, the transmitting side may learn a delivery status of each PDCP SDU by using the PDCP status report. The PDCP status report is used for an AM DRB configured with statusReportRequired, and is triggered by a receiving PDCP entity in the case of such as PDCP entity re-establishment, data recovery, or uplink data switch.

In the above embodiments, some trigger conditions may be added to enable the receiving side to transmit the PDCP status report, for example transmit periodically, or transmit in case of congestion, or transmit in a case where there is an error (or many errors) in received data, or transmit in a case where a transmitting side needs to discard data for other reasons, and so on.

In the above embodiments, the transmitting PDCP entity may further adds request (poll) information for requesting a PDCP entity of a receiving side to transmit a PDCP status report. The transmitting PDCP entity may obtain information such as whether a PDU Set has been completely successfully delivered, the number and a ratio of PDUs in the PDU Set that have been successfully delivered, according to the received PDCP status report.

In the above embodiments, when a certain PDCP SDU belonging to a PDU Set (of an application layer) is not confirmed by the PDCP status report as successfully delivered (the PDCP status report is not caused by handover), and a PSII of the PDU Set is configured (or configured as true), the transmitting PDCP entity of the terminal equipment discards all PDCP SDUs belonging to the PDU Set and their corresponding PDCP data PDUs.

In the above embodiments, that a PSII is configured (or configured as true) refers to that the PDU Set is configured with an integrity indication, indicating that an application layer requires all PDUs in order to use the PDU Set.

According to the above embodiments, description of TS 38.323 may be enhanced. For example, TS 38.323 may include the following description:

| |
|---|
| When the successful delivery of a PDCP SDU is not confirmed by PDCP status report (and the status report is not due to HO), the transmitting PDCP entity shall discard all the PDCP SDUs in the same (application level) PDU Set as this PDCP SDU along with the corresponding PDCP Data PDUs if the PSII is configured for this PDU Set. |

In the above embodiments, by taking the content criterion as a content ratio as an example, the terminal equipment may perform the following enhancement for an SDU discarding function of the PDCP layer:
when the number of PDCP SDUs belonging to a PDU Set (of an application layer) that have not been confirmed as being successfully delivered by the PDCP status report (the status report is not caused by handover) exceeds a first threshold, the transmitting PDCP entity of the terminal equipment discards all PDCP SDUs belonging to the PDU Set and their corresponding PDCP data PDUs.

In the above embodiments, still by taking the content ratio as a content criterion as an example, the terminal equipment may further perform the following enhancement for an SDU discarding function of the PDCP layer:
when the number of PDCP SDUs belonging to a PDU Set (of an application layer) that have been confirmed as being successfully delivered by the PDCP status report exceeds a second threshold, the transmitting PDCP entity of the terminal equipment discards all PDCP SDUs belonging to the PDU Set and their corresponding PDCP data PDUs.

In the above embodiments, the first threshold and the second threshold may be predefined, or may be configured by a network device, for example is configured by the network device via RRC signaling, the present disclosure does not impose any restrictions on a specific configuration mode, and relevant technologies may be referred to.

In each of the above embodiments, the content criterion of the PDU Set is taken account for data discarding, thus integrity of a PDU Set or validity of its contents is guaranteed, and network resources are saved.

In some further embodiments, the terminal equipment may perform PDU Set discarding according to an indication of exceeding a maximum number of transmissions of an RLC (Radio Link Control) layer.

In the above embodiments, the terminal equipment may receive an indication at a PDCP layer that a certain PDCP data PDU exceeds a maximum number of transmissions (for example, the indication is received from all RLC entities to which the PDCP data PDU is submitted ), and the SDUs corresponding to the PDCP data PDU belong to a certain PDU Set, and when the PDU Set is configured with a PSII, the transmitting PDCP entity discards all PDCP SDUs belonging to the PDU Set and their corresponding PDCP data PDUs.

In the above embodiments, when a certain RLC SDU exceeds a maximum number of retransmissions, an RLC layer of the terminal equipment may inform a higher layer (such as the PDCP layer, for example indicating to the PDCP layer) that the RLC SDU has reached the maximum number of retransmissions, thereby the PDCP layer may determine that the RLC SDU (corresponding to a PDCP PDU) transmission has failed.

According to the above embodiments, description of TS 38.323 may be enhanced. For example, TS 38.323 may include the following description:

| |
|---|
| Upon indication that the maximum number of retransmissions has been reached of a PDCP Data PDU from all RLC entities to which this PDCP Data PDU has been submitted, the transmitting PDCP entity shall discard all the PDCP SDUs in the same (application level) PDU Set as this PDCP SDU along with the corresponding PDCP Data PDUs if the PSII is TRUE for this PDU Set. |

In the above embodiments, by taking the content ratio as a content criterion as an example, the terminal equipment may perform the following enhancement for an SDU discarding function of the PDCP layer:
when the number of PDCP data PDUs belonging to a certain PDU Set (of an (application layer) that have been confirmed as delivery failures by an indication of exceeding the maximum number of transmissions of the RLC layer exceeds a third threshold, the transmitting PDCP entity of the terminal equipment discards all PDCP SDUs belonging to the PDU Set and their corresponding PDCP data PDUs.

In the above embodiments, the third threshold may be predefined, or may be configured by a network device, for example is configured by the network device via RRC signaling, the present disclosure does not impose any restrictions on a specific configuration mode, and relevant technologies may be referred to.

In the above embodiments, the content criterion of the PDU Set is also taken account for data discarding, thus integrity of a PDU Set or validity of its contents is guaranteed, and network resources are saved.

Each of the above embodiments is only illustrative for the embodiments of the present disclosure, but the present disclosure is not limited to this, appropriate modifications may be further made based on the above each embodiment. For example, each of the above embodiments may be used individually, or one or more of the above embodiments may be combined.

According to the method in the embodiments of the present disclosure, on the one hand, transmission delay of the PDU Set is taken into account as a whole, thereby meeting a PSDB demand of the PDU Set; on the other hand, the content criterion of the PDU Set is taken account for data discarding, integrity of a PDU Set or validity of its contents is guaranteed, and network resources are saved.

### Embodiments of a second aspect

The inventor finds that discarding a PDCP SDU that has been associated with a PDCP sequence number will cause a sequence number gap (SN gap) in transmitted PDCP data PDUs, thereby increasing PDCP reordering delay at a receiving PDCP entity. Moreover, when performing PDU Set discarding, a series of PDCP SDUs will be often discarded continuously, resulting in a larger sequence number gap. How to avoid or minimize the sequence number gap needs to be solved.

For at least one of the above problems, embodiments of the present disclosure provide a data processing method, which is described from a transmitting device side. The transmitting device may be a terminal equipment or a network device; correspondingly, the receiving device may be a network device or a terminal equipment.

FIG. 2 is a schematic diagram of a data processing method in the embodiments of the present disclosure. Referring to FIG. 2, the method includes:
201: a transmitting device, after the transmitting device discards all PDCP SDUs corresponding to a PDU Set, transmits sequence number information of PDCP SDUs in the PDCP SDUs that have associated with PDCP sequence numbers to a receiving device.

In the above embodiments, the PDU Set often corresponds to a series of PDCP SDUs with consecutive sequence numbers, so the transmitting device may transmit a discarded consecutive section of SDU sequence number information to the receiving device.

It should be noted that the above FIG. 2 only schematically describes the embodiments of the present disclosure, but the present disclosure is not limited to this. For example, other some operations can be increased. Persons skilled in the art may make appropriate modifications according to the above contents, not limited to the records in the above FIG. 2.

In the above embodiments, there are no restrictions on a method for discarding a PDU Set. For example, the method in the embodiments of the first aspect may be adopted for performing PDU Set discarding, or other methods may be adopted for performing PDU Set discarding.

According to the above embodiments, after discarding all PDCP SDUs corresponding to a PDU Set, a transmitting side may transmit sequence number information of PDCP SDUs in the PDCP SDUs that have associated with PDCP sequence numbers to a receiving side. In this way, a PDCP entity of the receiving side may learn which sequence numbers have been discarded by the transmitting side, thus will not wait to receive these data, thereby avoiding causing reordering delay.

In some embodiments, the sequence number information may be transmitted via a PDCP control PDU. For example, the sequence number information may be notified by adding a new PDCP control PDU at the PDCP layer. The PDCP control PDU may be called a PDCP discard report. The transmitting PDCP entity of the transmitting side may transmit a PDCP discard report to a peer PDCP entity (the receiving side) after the PDU Set is discarded, to notify the sequence number information of the discarded PDCP SDUs.

In some embodiments, the sequence number information includes a COUNT value (i.e., a PDCP sequence number of a PDCP SDU) of a first PDCP SDU in discarded consecutive PDCP SDUs (such as an entire PDU Set), for example called COUNT_start, and the number of the discarded consecutive PDCP SDUs, for example called length. The present disclosure is not limited to this. The sequence number information may further include a COUNT value of a first PDCP SDU and a COUNT value of a last PDCP SDU in the discarded consecutive PDCP SDUs, for example called COUNT_end.

FIG. 3 is a schematic diagram of an example of format of a PDCP discard report, showing a format of a PDCP control PDU as a PDCP discard report, by taking including COUNT_start and length as an example. The PDCP control PDU may use 0 as a D/C bit in a PDCP header, indicating that it is a control PDU, and define a new PDU Type (for example a binary bit number is 100), indicating that this PDU is a PDCP discard report. COUNT_start is 32-bit and length is 8-bit (it may further be 16-bit, etc.). For scalability, this report may include multiple groups of COUNT_start and length, indicating that discarding is performed for multiple consecutive SDU sections (such as multiple PDU Sets).

Each of the above embodiments is only illustrative for the embodiments of the present disclosure, but the present disclosure is not limited to this, appropriate modifications may be further made based on the above each embodiment. For example, each of the above embodiments may be used individually, or one or more of the above embodiments may be combined.

According to the method in the embodiments of the present disclosure, according to the above embodiments, the problem of a sequence number gap is solved, the reordering delay of the receiving side is reduced, and the service performance is improved.

### Embodiments of a third aspect

Embodiments of the present disclosure provide a data processing method, which is described from a receiving device side, the receiving device may be a network device or may be a terminal equipment, it is processing on a receiving side corresponding to the embodiments of the second aspect, the same contents as the embodiments of the second aspect are not repeated.

FIG. 4 is a schematic diagram of a data processing method in the embodiments of the present disclosure. As shown in FIG. 4, the method includes:
401: a receiving device, after receiving sequence number information of discarded PDCP SDUs, saves or records the sequence number information of the discarded PDCP SDUs; and
402: the receiving device delivers the stored PDCP SDUs to a higher layer according to the sequence number information of the discarded PDCP SDUs.

It should be noted that the above FIG. 4 only schematically describes the embodiments of the present disclosure, but the present disclosure is not limited to this. For example, an execution step of each operation may be adjusted appropriately, moreover some other operations may be increased or operations therein may be reduced. Persons skilled in the art may make appropriate modifications according to the above contents, not limited to the records in the above FIG. 4.

According to the above embodiments, as a receiving side, after receiving sequence number information of discarded PDCP SDUs (for example called a PDCP discard report, as shown in FIG. 3), it saves or records the sequence number information (for example called a COUNT value) of the discarded PDCP SDUs, thereby according to the sequence number information of the discarded PDCP SDUs, there is no need to wait for these discarded PDCP SDUs (also similar to assuming that these SDUs have been received), it may directly deliver PDCP SDUs that have been received (i.e., stored) (with the COUNT value before COUNT_end) to a higher layer. Thereby, the problem of a sequence number gap is solved, the reordering delay of the receiving side is reduced, and the service performance is improved.

In the above embodiments, if the receiving side is a UE, the discard report is for downlink data and is transmitted by a network side (network device). Correspondingly, if the receiving side is a network device, the discard report is for uplink data and is transmitted by the UE.

In some embodiments, the sequence number information includes a COUNT value of a first PDCP SDU in discarded consecutive PDCP SDUs and the number of the discarded consecutive PDCP SDUs, i.e., COUNT_start and length. Or, the sequence number information includes a COUNT value of a first PDCP SDU and a COUNT value of a last PDCP SDU in the discarded consecutive PDCP SDUs, i.e., COUNT_start and COUNT_end.

In the above embodiments, if the received sequence number information is COUNT_start and length, COUNT_end may be calculated according to COUNT_start.

In some embodiments, corresponding to the embodiments of the second aspect, the sequence number information may be transmitted via a PDCP control PDU. Embodiments of the second aspect may be specifically referred to, detailed description is omitted here.

In some embodiments, the receiving device maintains four state variables, i.e., a first state variable RX_DELIV, a second state variable RX_NEXT, a third state variable RX_DISCOARD0, and a fourth state variable RX_DISCARD1.

In the above embodiments, the first state variable RX_DELIV indicates a COUNT value of a first PDCP SDU that has not been delivered to a higher layer but is still waiting to be received; the second state variable RX_NEXT indicates a COUNT value of a next PDCP SDU expecting to be received; the third state variable RX_DISCARD0 corresponds to COUNT_start and indicates a COUNT value of a first discarded PDCP SDU of a transmitting PDCP entity of a transmitting device; and the fourth state variable RX_DISCARD1 corresponds to COUNT_end (or COUNT_start+length-1, if the PDCP discard report uses length) and indicates a COUNT value of a last discarded PDCP SDU of a transmitting PDCP entity of a transmitting device. The third and fourth state variables are newly introduced variables maintained by a receiving PDCP entity, the present disclosure does not impose any restrictions on their names, they may further be called other variable names.

In some embodiments, that the receiving device delivers the stored PDCP SDUs to a higher layer includes that: the receiving device consecutively delivers PDCP SDUs with a COUNT value less than or equal to a fourth state variable in the stored PDCP SDUs to the higher layer.

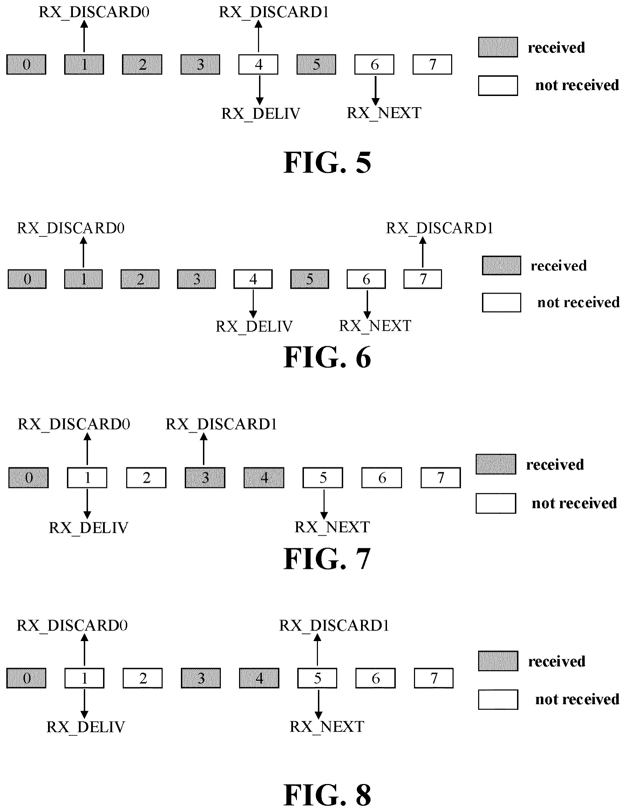

FIG. 5 to FIG. 8 are schematic diagram of several examples of a size relationship between "a third state variable and a fourth state variable" and "a first state variable and a second state variable", showing a situation in which a receiving side receives and does not receive sequence numbers of PDCP SDUs, and values of corresponding state variables.

In the example of FIG. 5, RX_DISCARD0 ≤ RX_DELIV , RX_DELIV ≤ RX_DISCARD1 < RX_NEXT - 1; in the example of FIG. 6, RX_DISCARD0 ≤ RX_DELIV, RX_DISCARD1 ≥ RX_DELIV, RX_DISCARD1 ≥ RX_NEXT - 1; in the example of FIG. 7, RX_DISCARD0 == RX_DELIV, RX_DISCARD1 < RX_NEXT - 1; in the example of FIG. 8, RX_DISCARD0 == RX_DELIV, RX_DISCARD1 ≥ RX_NEXT - 1.

In some embodiments, when receiving the PDCP discard report, the receiving device performs the following operations:
updating the third state variable to the COUNT value of the first PDCP SDU in the discarded consecutive PDCP SDUs in the discard report; and
updating the fourth state variable to the COUNT value of the first PDCP SDU in the discarded consecutive PDCP SDUs plus the value of the number of discarded consecutive PDCP SDUs minus 1.

In the above embodiments, if the third state variable is less than or equal to the first state variable and the first state variable is less than or equal to the fourth state variable, that is, in the scenarios shown in FIGs. 5 and 6, the receiving device may further perform at least one of the following operations:
delivering all stored PDCP SDUs to the higher layer in an ascending order of associated COUNT values after performing header decompression, until the COUNT value is less than or equal to the fourth state variable;
if the fourth state variable is less than the second state variable minus 1, delivering all stored PDCP SDUs with associated COUNT values having consecutive COUNT values starting from the fourth state variable+1 in an ascending order of the COUNT values to the higher layer;
updating the first state variable to the COUNT value of the first PDCP SDU that has not been delivered to the higher layer, wherein the COUNT value is greater than the first state variable; and
updating the second state variable to a maximum value between the first state variable and the second state variable before being updated.

In the above embodiments, the receiving device may further maintain a fifth state variable RX_REORD, the fifth state variable RX_REORD being used to indicate a following COUNT value of a COUNT value associated with a PDCP data PDU triggering a reordering timer (t-Reordering).

In the above embodiments, in the scenarios shown in FIGs. 5 and 6, the receiving device may further perform at least one of the following operations:
if the reordering timer is running and the first state variable is greater than or equal to the fifth state variable, stopping and resetting the reordering timer; and
if the reordering timer is not running and the first state variable is less than the second state variable, updating the fifth state variable to a value of the second state variable and starting the reordering timer.

In each of the above embodiments, by taking the UE as a receiving device as an example, when the UE receives the PDCP discard report, values of state variables at the receiving side are updated. For example, through comparison among the state variables, when it is determined that it belongs to the scenario shown in FIG. 5 or 6, the above operations may be performed, so as to take into account the discarded PDCP SDUs and deliver PDCP SDUs that can be currently delivered to a higher layer.

For example, for AM DRB, when a PDCP discard report is received from a downlink, the receiving PDCP entity performs the following operations:
- updating RX_DISCARD0 to a value of COUNT_start field, and updating RX_DISCARD1 to a value of COUNT_start field plus a value of length field minus 1.
- if RX_DISCARD0 ≤ RX_DELIV and RX_DISCARD1 ≥ RX_DELIV (the scenario shown in FIG. 5 and the scenario shown in FIG. 6):
   - delivering all stored PDCP SDUs to the higher layer in an ascending order of associated COUNT values after performing header decompression (if decompression has not been performed yet), until the COUNT value is less than or equal to RX_DISCARD1;
   - if RX_DISCARD1 < RX_NEXT - 1 (the scenario shown in FIG. 5):
      - delivering all stored PDCP SDUs with associated COUNT values having consecutive COUNT values starting from RX_DISCARD+1 in an ascending order of the COUNT values to the higher layer;
   - updating RX_DELIV to the COUNT value of the first PDCP SDU that has not been delivered to the higher layer, wherein COUNT > RX_DELIV (that is, if the COUNT value is greater than RX_DELIV before being updated);
   - updating RX_NEXT to a maximum value between RX_DELIV and the original RX_NEXT (that is, if RX_DELIV is greater than RX_NEXT, updating RX_NEXT to a value of RX_DELIV).
   - if t-Reordering is running, and RX_DELIV ≥ RX_REORD:
      - stopping and resetting the reordering timer;
   - if t-Reordering is not running, and RX_DELIV < RX_NEXT:
      - updating RX_REORD to RX_NEXT;
      - starting the reordering timer.

According to the above embodiments, description of TS 38.323 may be enhanced. For example, TS 38.323 may include the following description:

| | | | | |
|---|---|---|---|---|
| For AM DRBs, when a PDCP discard report is received in the downlink, the transmitting PDCP entity shall: | | | | |
| | - update RX_DISCARD0 to the value of COUNT_start field, update RX_DISCARD1 to the value of COUNT_start field plus length field and minus 1; | | | |
| | - if RX_DISCARD0 <= RX_DELIV and RX_DISCARD1 >= RX_DELIV: | | | |
| | | - deliver all stored PDCP SDU(s) to the upper layers in ascending order of associated COUNT value(s) up to the COUNT value of RX_DISCARD1 after performing header decompression, if not decompressed before; | | |
| | | - if RX_DISCARD1 < RX_NEXT - 1: | | |
| | | | - deliver all stored PDCP SDU(s) with consecutively associated COUNT value(s) starting from COUNT = RX_DISCARD1 + 1; | |
| | | - update RX_DELIV to the COUNT value of the first PDCP SDU which has not been delivered to upper layers, with COUNT value > RX_DELIV; | | |
| | | - update RX_NEXT to max (RX_NEXT, RX_DELIV); | | |
| | | - if *t-Reordering* is running, and if RX_DELIV >= RX_REORD: | | |
| | | | | - stop and reset *t-Reordering.* |
| | | - if *t-Reordering* is not running, and RX_DELIV < RX_NEXT: | | |
| | | | | - update RX_REORD to RX_NEXT; |
| | | | | - start *t-Reordering.* |

In some embodiments, if the third state variable is equal to the first state variable, that is, in the scenarios shown in FIGs. 7 and 8, the receiving device performs at least one of the following operations:
delivering all stored PDCP SDUs to the higher layer in an ascending order of associated COUNT values after performing header decompression, until the COUNT value is less than or equal to the fourth state variable;
if the fourth state variable is less than the second state variable minus 1, delivering all stored PDCP SDUs with associated COUNT values having consecutive COUNT values starting from the fourth state variable+1 in an ascending order of the COUNT values to the higher layer;
updating the first state variable to the COUNT value of the first PDCP SDU that has not been delivered to the higher layer, wherein the COUNT value is greater than the first state variable; and
updating the second state variable to a maximum value between the first state variable and the second state variable before being updated.

In the above embodiments, the receiving device may perform the above operations upon receiving a PDCP data PDU from a lower layer.

In the above embodiments, by taking the UE as a receiving device as an example, when a PDCP data PDU is received from a lower layer, through comparison among the above state variables, when it is determined that it belongs to the scenario shown in FIG. 7 or FIG. 8, the above operations may be performed, so that in a case where the current PDCP data PDU reception processing is completed and the state variables change, SDUs that can be delivered currently are delivered to a higher layer by using discarded SDU sequence number information.

For example, if the received PDCP data PDU is not discarded (that is, no data PDUs with the same COUNT have been received before), the receiving PDCP entity:
- if RX_DISCARD0 == RX_DELIV (the scenarios shown in FIG. 7 and FIG. 8):
   - delivering all stored PDCP SDUs to the higher layer in an ascending order of associated COUNT values after performing header decompression (if decompression has not been performed yet), until the COUNT value is less than or equal to RX_DISCARD1;
   - if RX_DISCARD1 < RX_NEXT - 1 (the scenario shown in FIG. 7):
      - delivering all stored PDCP SDUs with associated COUNT values having consecutive COUNT values starting from RX_DISCARD+1 in an ascending order of the COUNT values to the higher layer;
   - updating RX_DELIV to the COUNT value of the first PDCP SDU that has not been delivered to the higher layer, wherein COUNT > RX_DELIV (that is, if the COUNT value is greater than RX_DELIV before being updated);
   - updating RX_NEXT to a maximum value between RX_DELIV and the original RX_NEXT (that is, if RX_DELIV is greater than RX_NEXT, updating RX_NEXT to a value of RX_DELIV).

According to the above embodiments, description of TS 38.323 may be enhanced. For example, TS 38.323 may include the following description:

| | | | | |
|---|---|---|---|---|
| If the received PDCP Data PDU with COUNT value = RCVD_COUNT is not discarded above, the receiving PDCP entity shall: | | | | |
| | - store the resulting PDCP SDU in the reception buffer; | | | |
| | - if RCVD_COUNT >= RX_NEXT: | | | |
| | | - update RX_NEXT to RCVD_COUNT + 1. | | |
| | - if *outOfOrderDelivery* is configured: | | | |
| | | - deliver the resulting PDCP SDU to upper layers after performing header decompression using EHC. | | |
| | - if RCVD_COUNT = RX_DELIV: | | | |
| | | - deliver to upper layers in ascending order of the associated COUNT value after performing header decompression, if not decompressed before; | | |
| | | | - all stored PDCP SDU(s) with consecutively associated COUNT value(s) starting from COUNT = RX_DELIV; | |
| | | - update RX_DELIV to the COUNT value of the first PDCP SDU which has not been delivered to upper layers, with COUNT value > RX_DELIV; | | |
| | - if RX_DISCARD0 = RX_DELIV: | | | |
| | | - deliver all stored PDCP SDU(s) to the upper layers in ascending order of associated COUNT value(s) up to the COUNT value of RX_DISCARD1 after performing header decompression. if not decompressed before: | | |
| | | - if RX_DISCARD1 < RX_NEXT - 1: | | |
| | | | - deliver all stored PDCP SDU(s) with consecutively associated COUNT value(s) starting from COUNT = RX_DISCARD1 + 1: | |
| | | - update RX_DELIV to the COUNT value of the first PDCP SDU which has not been delivered to upper lavers, with COUNT value > RX_DELIV: | | |
| | | - update RX_NEXT to max (RX_NEXT, RX_DELIV): | | |
| | | - if *t-Reordering* is running, and if RX_DELIV >= RX_REORD: | | |
| | | | | - stop and reset *t-Reordering.* |
| | | - if *t-Reordering* is not running, and RX_DELIV < RX_NEXT: | | |
| | | | | - update RX_REORD to RX_NEXT; |
| | | | | - start *t-Reordering*. |

In the above embodiments, the PDCP entity of the receiving device is not configured with outOfOrderDelivery. That is, the above enhancement may be performed in a case where outOfOrderDelivery is not configured. That is to say, the PDCP entity needs to deliver received PDCP SDUs to a higher layer in order.

Each of the above embodiments is only illustrative for the embodiments of the present disclosure, but the present disclosure is not limited to this, appropriate modifications may be further made based on the above each embodiment. For example, each of the above embodiments may be used individually, or one or more of the above embodiments may be combined.

According to the method in the embodiments of the present disclosure, the problem of a sequence number gap is solved, the reordering delay of the receiving side is reduced, and the service performance is improved.

### Embodiments of a fourth aspect

Embodiments of the present disclosure provide a data processing apparatus.

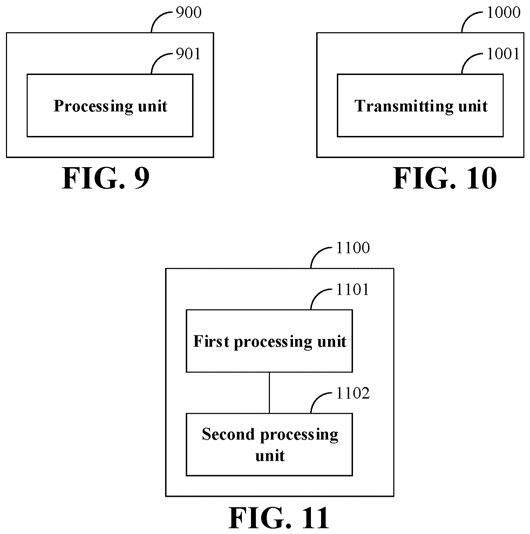

FIG. 9 is a schematic diagram of a data processing apparatus in the embodiments of the present disclosure, the apparatus may, for example, be a terminal equipment, or may be one or more parts or components configured in the terminal equipment. The principle of the apparatus to solve the problem is same as the method in the embodiments of the first aspect, thus its specific implementation can refer to the implementation of the method in the embodiments of the first aspect, the same contents will not be repeated.

As shown in FIG. 9, the data processing apparatus 900 comprises:
a processing unit 901 configured to discard all PDCP SDUs in a PDU Set and their corresponding PDCP data PDUs or deem that discard timers for all PDCP SDUs belonging to the PDU Set expire in a case where at least one of the following conditions associated with the PDU Set is satisfied that:
a discard timer corresponding to a PDCP SDU expires, and the PDCP SDU belongs to the PDU Set;
a discard timer corresponding to the PDU Set expires;
a PDCP SDU belonging to the PDU Set is not confirmed by a PDCP status report as being successfully delivered, and a PSII of the PDU Set is configured; and
a PDCP layer of the terminal equipment receives an indication that a PDCP data PDU exceeds a maximum number of transmissions, a SDU corresponding to the PDCP data PDU belongs to the PDU Set, and the PDU Set is configured with a PSII.

In some embodiments, that the discard timer corresponding to the PDU Set expires comprises that: a transmitting PDCP entity of a terminal equipment maintains a discard timer for the PDU Set, and the discard timer expires.

In the above embodiments, when the transmitting PDCP entity of the terminal equipment receives a PDCP SDU from a higher layer, if the PDCP SDU belongs to a PDU Set of an application level and is a first PDU in the PDU Set, the transmitting PDCP entity of the terminal equipment starts the discard timer associated with the PDU Set.

In some embodiments, when the number of PDCP SDUs belonging to the PDU Set that have not been confirmed as being successfully delivered by the PDCP status report exceeds a first threshold, the processing unit 901 discards all PDCP SDUs belonging to the PDU Set and their corresponding PDCP data PDUs via the transmitting PDCP entity.

In the above embodiments, the first threshold may be predefined, or may be configured by the network device via RRC signaling.

In some embodiments, when the number of PDCP SDUs belonging to the PDU Set that have been confirmed as being successfully delivered by the PDCP status report exceeds a second threshold, the processing unit 901 discards all PDCP SDUs belonging to the PDU Set and their corresponding PDCP data PDUs via the transmitting PDCP entity.

In the above embodiments, the second threshold may be predefined, or may be configured by the network device via RRC signaling.

In some embodiments, that the PDCP layer of the terminal equipment receives an indication that a PDCP data PDU exceeds a maximum number of transmissions includes: when an RLC SDU exceeds a maximum number of retransmissions, the RLC layer of the terminal equipment indicates to the PDCP layer that the RLC SDU has reached the maximum number of retransmissions, and the RLC SDU corresponds to the PDCP data PDU.

FIG. 10 is another schematic diagram of a data processing apparatus in the embodiments of the present disclosure. The apparatus may, for example, be a transmitting device, or may be one or more parts or components configured in the transmitting device. The transmitting device may be a terminal equipment or may be a network device. The principle of the apparatus to solve the problem is same as the method in the embodiments of the second aspect, thus for its specific implementation, the implementation of the method in the embodiments of the second aspect may be referred to, the same contents will not be repeated.

As shown in FIG. 10, the data processing apparatus 1000 comprises:
a transmitting unit 1001 configured to, after the transmitting device discards all PDCP SDUs corresponding to a PDU Set, transmit sequence number information of PDCP SDUs in the PDCP SDUs that have associated with PDCP sequence numbers to a receiving device.

In some embodiments, the sequence number information includes a COUNT value of a first PDCP SDU in discarded consecutive PDCP SDUs and the number of the discarded consecutive PDCP SDUs.

In some embodiments, the sequence number information includes a COUNT value of a first PDCP SDU and a COUNT value of a last PDCP SDU in the discarded consecutive PDCP SDUs.

In each of the above embodiments, the sequence number information may be transmitted via a PDCP control PDU.

FIG. 11 is a further schematic diagram of a data processing apparatus in the embodiments of the present disclosure. The apparatus may, for example, be a receiving device, or may be one or more parts or components configured in the receiving device. The receiving device may be a network device or may be a terminal equipment. The principle of the apparatus to solve the problem is same as the method in the embodiments of the third aspect, thus for its specific implementation, the implementation of the method in the embodiments of the third aspect may be referred to, the same contents will not be repeated.

As shown in FIG. 11, the data processing apparatus 1100 comprises:
a first processing unit 1101 configured to, after the receiving device receives sequence number information of discarded PDCP SDUs, save or record the sequence number information of the discarded PDCP SDUs; and
a second processing unit 1102 configured to deliver the stored PDCP SDUs to a higher layer according to the sequence number information of the discarded PDCP SDUs.

In some embodiments, the sequence number information includes a COUNT value of a first PDCP SDU in discarded consecutive PDCP SDUs and the number of the discarded consecutive PDCP SDUs; or, the sequence number information includes a COUNT value of a first PDCP SDU and a COUNT value of a last PDCP SDU in the discarded consecutive PDCP SDUs.

In some embodiments, the sequence number information is transmitted via a PDCP control PDU.

In some embodiments, the receiving device maintains the following four state variables:
a first state variable (RX_DELIV), which indicates a COUNT value of a first PDCP SDU that has not been delivered to a higher layer but is still waiting to be received;
a second state variable (RX_NEXT), which indicates a COUNT value of a next PDCP SDU expecting to be received;
a third state variable (RX_DISCARD0), which indicates a COUNT value of a first discarded PDCP SDU of a transmitting PDCP entity of a transmitting device; and
a fourth state variable (RX _DISCARD1), which indicates a COUNT value of a last discarded PDCP SDU of the transmitting PDCP entity of the transmitting device.

In some embodiments, that the second processing unit 1102 delivers the stored PDCP SDUs to a higher layer comprises that:
the second processing unit 1102 consecutively delivers SDUs with a COUNT value less than or equal to a fourth state variable in the stored PDCP SDUs to the higher layer.

In some embodiments, the second processing unit 1102 further performs the following operations:
updating the third state variable to the COUNT value of the first PDCP SDU in the discarded consecutive PDCP SDUs; and
updating the fourth state variable to the COUNT value of the first PDCP SDU in the discarded consecutive PDCP SDUs plus the value of the number of discarded consecutive PDCP SDUs minus 1.

In the above embodiments, if the third state variable is less than or equal to the first state variable and the first state variable is less than or equal to the fourth state variable, that is, in the scenarios shown in FIGs. 5 and 6, the second processing unit 1102 may further perform at least one of the following operations:
delivering all stored PDCP SDUs to the higher layer in an ascending order of associated COUNT values after performing header decompression, until the COUNT value is less than or equal to the fourth state variable;
if the fourth state variable is less than the second state variable minus 1, delivering all stored PDCP SDUs with associated COUNT values having consecutive COUNT values starting from the fourth state variable+1 in an ascending order of the COUNT values to the higher layer;
updating the first state variable to the COUNT value of the first PDCP SDU that has not been delivered to the higher layer, wherein the COUNT value is greater than the first state variable; and
updating the second state variable to a maximum value between the first state variable and the first state variable before being updated.

In the above embodiments, the receiving device may further maintain a fifth state variable (RX_REORD), the fifth state variable indicates a following COUNT value of a COUNT value associated with a PDCP data PDU triggering a reordering timer.

In the above embodiments, the second processing unit 1102 may further perform at least one of the following operations:
if the reordering timer is running and the first state variable is greater than or equal to the fifth state variable, stopping and resetting the reordering timer; and
if the reordering timer is not running and the first state variable is less than the second state variable, updating the fifth state variable to a value of the second state variable and starting the reordering timer.

In some embodiments, if the third state variable is equal to the first state variable, that is, in the scenarios shown in FIGs. 7 and 8, the second processing unit 1102 may further perform at least one of the following operations:
delivering all stored PDCP SDUs to the higher layer in an ascending order of associated COUNT values after performing header decompression, until the COUNT value is less than or equal to the fourth state variable;
if the fourth state variable is less than the second state variable minus 1, delivering all stored PDCP SDUs with associated COUNT values having consecutive COUNT values starting from the fourth state variable+1 in an ascending order of the COUNT values to the higher layer;
updating the first state variable to the COUNT value of the first PDCP SDU that has not been delivered to the higher layer, wherein the COUNT value is greater than the first state variable; and
updating the second state variable to a maximum value between the first state variable and the second state variable before being updated.

In the above embodiments, the second processing unit 1102 may perform the above operations when the receiving device receives a PDCP data PDU from a lower layer.

In the embodiments of the present disclosure, the PDCP entity of the receiving device is not configured with outOfOrderDelivery. That is, the apparatus 1100 may perform the above operations in a case where the PDCP entity of the receiving device is not configured with outOfOrderDelivery.

It's worth noting that the above only describes components or modules related to the present disclosure, but the present disclosure is not limited to this. The data processing apparatuses 900, 1000, 1100 in the embodiments of the present disclosure may further comprise other components or modules. For detailed contents of these components or modules, relevant technologies can be referred to.

Moreover, for the sake of simplicity, FIG. 9 to FIG. 11 only exemplarily show a connection relationship or signal direction between components or modules, however persons skilled in the art should know that various relevant technologies such as bus connection can be used. The above components or modules may be realized by a hardware facility such as a processor, a memory, a transmitter, a receiver, etc. The embodiments of the present disclosure have no limitation to this.

According to the apparatuses in the embodiments of the present disclosure, the problem of data discarding of the PDU Set in a wireless access network is solved, XR and media service applications may be supported better. Moreover, a discard report is further introduced. By enhancing a transmitting side and a receiving side, the problem of a sequence number gap caused by data discarding is solved, reordering delay is reduced, thereby the transmission performance of the XRM service is improved. Through the apparatuses in the embodiments of the present disclosure, differentiated handling of the PDU Set may be guaranteed, and an integrated data processing demand of the PDU Set may be satisfied.

### Embodiments of a fifth aspect

Embodiments of the present disclosure provide a communication system, comprising a terminal equipment and a network device, the terminal equipment is configured to perform the method described in the embodiments of any of the first to third aspects, or the network device is configured to perform the method described in the embodiments of the second or third aspect. Behaviors of the terminal equipment and the network device have been described in detail in the embodiments of the first to third aspects, whose contents are incorporated here and will not be repeated here.

Embodiments of the present disclosure further provide a terminal equipment, comprising a memory and a processor, the memory storing a computer program, and the processor being configured to perform the computer program to implement the method described in the embodiments of any one of the first to third aspects.

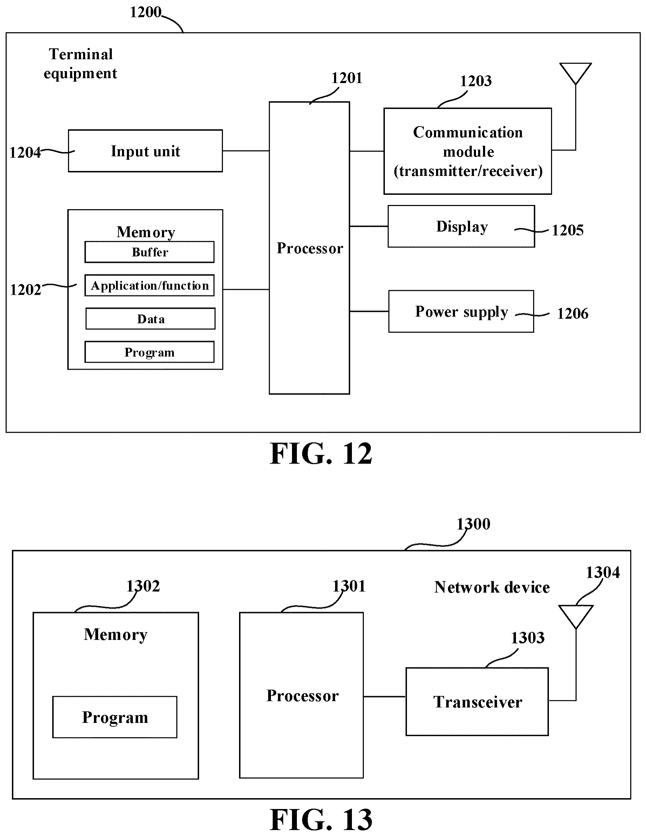

FIG. 12 is a schematic diagram of a terminal equipment in the embodiments of the present disclosure. As shown in FIG. 12, the terminal equipment 1200 may comprise a processor 1201 and a memory 1202; the memory 1202 stores data and programs, and is coupled to the processor 1201. It's worth noting that this figure is exemplary; other types of structures may also be used to supplement or replace this structure, so as to realize a telecommunication function or other functions.

For example, the processor 1201 may be configured to perform a program to implement the method described in the embodiments of any one of the first to third aspects.

As shown in FIG. 12, the terminal equipment 1200 may further comprise: a communication module 1203, an input unit 1204, a display 1205 and a power supply 1206. The functions of said components are similar to related arts, which are not repeated here. It's worth noting that the terminal equipment 1200 does not have to include all the components shown in FIG. 12, said components are not indispensable. Moreover, the terminal equipment 1200 may further include components not shown in FIG. 12, related arts may be referred to.

Embodiments of the present disclosure further provide a network device, comprising a memory and a processor, the memory storing a computer program, and the processor being configured to perform the computer program to implement the method described in the embodiments of the second aspect or the third aspect.

FIG. 13 is a schematic diagram of a network device in the embodiments of the present disclosure. As shown in FIG. 13, the network device 1300 may comprise: a central processing unit (CPU)1301 and a memory 1302; the memory 1302 is coupled to the central processing unit 1301. The memory 1302 may store various data; moreover, also stores a program for information processing, and performs the program under the control of the processor 1301, so as to receive various information transmitted by the terminal equipment and transmit various information to the terminal equipment.

For example, the processor 1301 can be configured to perform a program to implement the method described in the embodiments of the second aspect or the third aspect.

In addition, as shown in FIG. 13, the network device 1300 may further comprise: a transceiver 1303 and an antenna 1304, etc.; wherein the functions of said components are similar to relevant arts, which are not repeated here. It's worth noting that the network device 1300 does not have to include all the components shown in FIG. 13. Moreover, the network device 1300 may further comprise components not shown in FIG. 13, related arts may be referred to.

Embodiments of the present disclosure further provide a computer readable program, wherein when a terminal equipment performs the program, the program enables a computer to perform the method described in the embodiments of any one of the first to third aspects, in the terminal equipment.

Embodiments of the present disclosure further provide a storage medium in which a computer readable program is stored, wherein the computer readable program enables a computer to perform the method as described in the embodiments of any one of the first to third aspects, in the terminal equipment.

Embodiments of the present disclosure further provide a computer readable program, wherein when a network device performs the program, the program enables a computer to perform the method described in the embodiments of the second or third aspect, in the network device.

Embodiments of the present disclosure further provide a storage medium in which a computer readable program is stored, wherein the computer readable program enables a computer to perform the method as described in the embodiments of the second or third aspect, in a network device.

The apparatus and method in the present disclosure may be realized by hardware, or may be realized by combining hardware with software. The present disclosure relates to such a computer readable program, when the program is executed by a logic component, the computer readable program enables the logic component to realize the device described in the above text or a constituent component, or enables the logic component to realize various methods or steps described in the above text. The logic component is e.g. a field programmable logic component, a microprocessor, a processor used in a computer, etc. The present disclosure further relates to a storage medium storing the program, such as a hard disk, a magnetic disk, an optical disk, a DVD, a flash memory and the like.

By combining with the method/device described in the embodiments of the present disclosure, it may be directly reflected as hardware, a software executed by a processor, or a combination of the two. For example, one or more in the functional block diagram or one or more combinations in the functional block diagram as shown in the drawings may correspond to software modules of a computer program flow, and may also correspond to hardware modules. These software modules may respectively correspond to the steps as shown in the drawings. These hardware modules may be realized by solidifying these software modules e.g. using a field-programmable gate array (FPGA).

A software module may be located in a RAM memory, a flash memory, a ROM memory, an EPROM memory, an EEPROM memory, a register, a hard disk, a mobile magnetic disk, a CD-ROM or a storage medium in any other form as known in this field. A storage medium may be coupled to a processor, thereby enabling the processor to read information from the storage medium, and to write the information into the storage medium; or the storage medium may be a constituent part of the processor. The processor and the storage medium may be located in an ASIC. The software module may be stored in a memory of a mobile terminal, and may also be stored in a memory card of the mobile terminal. For example, if a device (such as the mobile terminal) adopts a MEGA-SIM card with a larger capacity or a flash memory apparatus with a large capacity, the software module may be stored in the MEGA-SIM card or the flash memory apparatus with a large capacity.

One or more in the functional block diagram or one or more combinations in the functional block diagram as described in the drawings may be implemented as a general-purpose processor for performing the functions described in the present disclosure, a digital signal processor (DSP), an application-specific integrated circuit (ASIC), a field-programmable gate array (FPGA) or other programmable logic device, discrete gate or transistor logic device, discrete hardware components or any combination thereof. One or more in the functional block diagram or one or more combinations in the functional block diagram as described in the drawings may further be implemented as a combination of computer equipment, such as a combination of a DSP and a microprocessor, a plurality of microprocessors, one or more microprocessors combined and communicating with the DSP or any other such configuration.

The present disclosure is described by combining with the specific implementations, however persons skilled in the art should clearly know that these descriptions are exemplary and do not limit the protection scope of the present disclosure. Persons skilled in the art may make various variations and modifications to the present disclosure according to the principle of the present disclosure, these variations and modifications are also within the scope of the present disclosure.

Regarding the above implementations disclosed in this embodiment, the following supplements are further disclosed:
1. A data processing method, applied to a terminal equipment, wherein the method includes:
   a terminal equipment discards all PDCP SDUs in a PDU Set and their corresponding PDCP data PDUs or deems that discard timers for all PDCP SDUs belonging to the PDU Set expire in a case where at least one of the following conditions associated with the PDU Set is satisfied:
   a discard timer corresponding to a PDCP SDU expires, and the PDCP SDU belongs to the PDU Set;
   a discard timer corresponding to the PDU Set expires;
   a PDCP SDU belonging to the PDU Set is not confirmed by a PDCP status report as being successfully delivered, and a PSII of the PDU Set is configured; and
   a PDCP layer of the terminal equipment receives an indication that a PDCP data PDU exceeds a maximum number of transmissions, a SDU corresponding to the PDCP data PDU belongs to the PDU Set, and the PDU Set is configured with a PSII.
2. The method according to Supplement 1, wherein,
   that the discard timer corresponding to the PDU Set expires comprises that: a transmitting PDCP entity of the terminal equipment maintains a discard timer for the PDU Set, and the discard timer expires.
3. The method according to Supplement 2, wherein,
   when the transmitting PDCP entity of the terminal equipment receives a PDCP SDU from a higher layer, if the PDCP SDU belongs to a PDU Set of an application level and is a first PDU in the PDU Set, the transmitting PDCP entity of the terminal equipment starts the discard timer associated with the PDU Set.
4. The method according to Supplement 1, wherein the method further includes:
   when the number of PDCP SDUs belonging to the PDU Set that have not been confirmed as being successfully delivered by the PDCP status report exceeds a first threshold, the transmitting PDCP entity of the terminal equipment discards all PDCP SDUs belonging to the PDU Set and their corresponding PDCP data PDUs.
5. The method according to Supplement 1, wherein the method further includes:
   when the number of PDCP SDUs belonging to the PDU Set that have been confirmed as being successfully delivered by the PDCP status report exceeds a second threshold, the transmitting PDCP entity of the terminal equipment discards all PDCP SDUs belonging to the PDU Set and their corresponding PDCP data PDUs.
6. The method according to Supplement 1, wherein that a PDCP layer of the terminal equipment receives an indication that a PDCP data PDU exceeds a maximum number of transmissions comprises that:
   when an RLC SDU exceeds a maximum number of retransmissions, an RLC layer of the terminal equipment indicates to the PDCP layer that the RLC SDU has reached the maximum number of retransmissions, the RLC SDU corresponding to the PDCP data PDU.
7. The method according to Supplement 4 or 5, wherein,
   the threshold is predefined, or is configured by a network device via RRC signaling.
8. A data processing method, applied to a transmitting device, the transmitting device being a terminal equipment or a network device, wherein the method includes:
   after discarding all PDCP SDUs corresponding to a PDU Set, the transmitting device transmits sequence number information of PDCP SDUs in the PDCP SDUs that have associated with PDCP sequence numbers to a receiving device.
9. The method according to Supplement 8, wherein,
   the sequence number information includes a COUNT value of a first PDCP SDU in discarded consecutive PDCP SDUs and the number of the discarded consecutive PDCP SDUs; or
   the sequence number information includes a COUNT value of a first PDCP SDU and a COUNT value of a last PDCP SDU in the discarded consecutive PDCP SDUs.
10. The method according to Supplement 8 or 9, wherein,
   the sequence number information is transmitted via a PDCP control PDU.
11. A data processing method, applied to a receiving device, the receiving device being a network device or a terminal equipment, wherein the method includes:
   after receiving sequence number information of discarded PDCP SDUs, the receiving device saves or records the sequence number information of the discarded PDCP SDUs; and
   the receiving device delivers the stored PDCP SDUs to a higher layer according to the sequence number information of the discarded PDCP SDUs.
12. The method according to Supplement 11, wherein,
   the sequence number information includes a COUNT value of a first PDCP SDU in discarded consecutive PDCP SDUs and the number of the discarded consecutive PDCP SDUs; or
   the sequence number information includes a COUNT value of a first PDCP SDU and a COUNT value of a last PDCP SDU in the discarded consecutive PDCP SDUs.
13. The method according to Supplement 11 or 12, wherein,
   the sequence number information is transmitted via a PDCP control PDU.
14. The method according to any one of Supplements 11-13, wherein,
   the receiving device maintains the following four state variables:
   a first state variable (RX_DELIV), which indicates a COUNT value of a first PDCP SDU that has not been delivered to a higher layer but is still waiting to be received;
   a second state variable (RX_NEXT), which indicates a COUNT value of a next PDCP SDU expecting to be received;
   a third state variable (RX_DISCARD0), which indicates a COUNT value of a first discarded PDCP SDU of a transmitting PDCP entity of a transmitting device; and
   a fourth state variable (RX _DISCARD1), which indicates a COUNT value of a last discarded PDCP SDU of the transmitting PDCP entity of the transmitting device.
15. The method according to any one of Supplements 11-14, wherein that the receiving device delivers the stored PDCP SDUs to a higher layer comprises:
   the receiving device consecutively delivers SDUs with a COUNT value less than or equal to a fourth state variable in the stored PDCP SDUs to the higher layer, the fourth state variable indicating a COUNT value of a last discarded PDCP SDU of the transmitting PDCP entity of the transmitting device.
16. The method according to Supplement 14 or 15, wherein the method further includes:
   the receiving device performs the following operations:
   updating the third state variable to the COUNT value of the first PDCP SDU in the discarded consecutive PDCP SDUs; and
   updating the fourth state variable to the COUNT value of the first PDCP SDU in the discarded consecutive PDCP SDUs plus the value of the number of discarded consecutive PDCP SDUs minus 1.
17. The method according to Supplement 16, wherein,
   if the third state variable is less than or equal to the first state variable and the first state variable is less than or equal to the fourth state variable, the receiving device further performs at least one of the following operations:
   delivering all stored PDCP SDUs to the higher layer in an ascending order of associated COUNT values after performing header decompression, until the COUNT value is less than or equal to the fourth state variable;
   if the fourth state variable is less than the second state variable minus 1, delivering all stored PDCP SDUs with associated COUNT values having consecutive COUNT values starting from the fourth state variable+1 in an ascending order of the COUNT values to the higher layer;
   updating the first state variable to the COUNT value of the first PDCP SDU that has not been delivered to the higher layer, wherein the COUNT value is greater than the first state variable; and
   updating the second state variable to a maximum value between the first state variable and the first state variable before being updated.
18. The method according to Supplement 17, wherein,
   the receiving device further maintains a fifth state variable (RX_REORD), the fifth state variable indicating a following COUNT value of a COUNT value associated with a PDCP data PDU triggering a reordering timer; and
   the receiving device further performs at least one of the following operations:
      if the reordering timer is running and the first state variable is greater than or equal to the fifth state variable, stopping and resetting the reordering timer; and
      if the reordering timer is not running and the first state variable is less than the second state variable, updating the fifth state variable to a value of the second state variable and starting the reordering timer.
19. The method according to Supplement 15, wherein,
   if the third state variable is equal to the first state variable, the receiving device performs at least one of the following operations:
   delivering all stored PDCP SDUs to the higher layer in an ascending order of associated COUNT values after performing header decompression, until the COUNT value is less than or equal to the fourth state variable;
   if the fourth state variable is less than the second state variable minus 1, delivering all stored PDCP SDUs with associated COUNT values having consecutive COUNT values starting from the fourth state variable+1 in an ascending order of the COUNT values to the higher layer;
   updating the first state variable to the COUNT value of the first PDCP SDU that has not been delivered to the higher layer, wherein the COUNT value is greater than the first state variable; and
   updating the second state variable to a maximum value between the first state variable and the second state variable before being updated.
20. The method according to Supplement 19, wherein,
   the receiving device performs the operations upon receiving a PDCP data PDU from a lower layer.
21. The method according to any one of Supplements 11-20, wherein,
   a PDCP entity of the receiving device is not configured with outOfOrderDelivery.
22. A terminal equipment, comprising a memory and a processor, the memory storing a computer program, and the processor being configured to perform the computer program to implement the method according to any one of Supplements 1 to 21.
23. A network device, comprising a memory and a processor, the memory storing a computer program, and the processor being configured to perform the method according to any one of Supplements 8 to 21.
24. A communication system, comprising a terminal equipment and a network device, the terminal equipment being configured to perform the method according to any one of Supplements 1 to 21, and/or, the network device being configured to perform the method according to any one of Supplements 8 to 21.

## Claims

1. A data processing apparatus, configured in a terminal equipment, wherein the apparatus comprises:
a processing unit configured to discard all packet data convergence protocol service data units (PDCP SDUs) in a protocol data unit set (PDU Set) and their corresponding PDCP data protocol data units (PDUs) or deem that discard timers for all PDCP SDUs belonging to the PDU Set expire in a case where at least one of the following conditions associated with the PDU Set is satisfied that:
a discard timer corresponding to a PDCP SDU expires, and the PDCP SDU belongs to the PDU Set;
a discard timer corresponding to the PDU Set expires;
a PDCP SDU belonging to the PDU Set is not confirmed by a PDCP status report as being successfully delivered, and a PSII of the PDU Set is configured; and
a PDCP layer of the terminal equipment receives an indication that a PDCP data PDU exceeds a maximum number of transmissions, a SDU corresponding to the PDCP data PDU belongs to the PDU Set, and the PDU Set is configured with a PSII.

2. The apparatus according to claim 1, wherein,
that the discard timer corresponding to the PDU Set expires comprises that: a transmitting PDCP entity of the terminal equipment maintains a discard timer for the PDU Set, and the discard timer expires.

3. The apparatus according to claim 2, wherein,
when the transmitting PDCP entity of the terminal equipment receives a PDCP SDU from a higher layer, if the PDCP SDU belongs to a PDU Set of an application level and is a first PDU in the PDU Set, the processing unit starts the discard timer associated with the PDU Set via the transmitting PDCP entity.

4. The apparatus according to claim 1, wherein the apparatus further comprises:
when the number of PDCP SDUs belonging to the PDU Set that have not been confirmed as being successfully delivered by the PDCP status report exceeds a first threshold, the processing unit discards all PDCP SDUs belonging to the PDU Set and their corresponding PDCP data PDUs via the transmitting PDCP entity.

5. The apparatus according to claim 1, wherein the apparatus further comprises:
when the number of PDCP SDUs belonging to the PDU Set that have been confirmed as being successfully delivered by the PDCP status report exceeds a second threshold, the processing unit discards all PDCP SDUs belonging to the PDU Set and their corresponding PDCP data PDUs via the transmitting PDCP entity.

6. The apparatus according to claim 1, wherein that a PDCP layer of the terminal equipment receives an indication that a PDCP data PDU exceeds a maximum number of transmissions comprises that:
when a radio link control service data unit (RLC SDU) exceeds a maximum number of retransmissions, a radio link control (RLC) layer of the terminal equipment indicates to the PDCP layer that the RLC SDU has reached the maximum number of retransmissions, the RLC SDU corresponding to the PDCP data PDU.

7. The apparatus according to claim 4, wherein,
the first threshold is predefined, or is configured by a network device via radio resource control (RRC) signaling.

8. A data processing apparatus, configured in a transmitting device, the transmitting device being a terminal equipment or a network device, wherein the apparatus comprises:
a transmitting unit configured to, after the transmitting device discards all PDCP SDUs corresponding to a PDU Set, transmit sequence number information of PDCP SDUs in the PDCP SDUs that have associated with PDCP sequence numbers to a receiving device.

9. The apparatus according to claim 8, wherein,
the sequence number information includes a COUNT value of a first PDCP SDU in discarded consecutive PDCP SDUs and the number of the discarded consecutive PDCP SDUs; or
the sequence number information includes a COUNT value of a first PDCP SDU and a COUNT value of a last PDCP SDU in the discarded consecutive PDCP SDUs.

10. The apparatus according to claim 8, wherein,
the sequence number information is transmitted via a PDCP control PDU.

11. A data processing apparatus, configured in a receiving device, the receiving device being a network device or a terminal equipment, wherein the apparatus comprises:
a first processing unit configured to, after the receiving device receives sequence number information of discarded PDCP SDUs, save or record the sequence number information of the discarded PDCP SDUs; and
a second processing unit configured to deliver the stored PDCP SDUs to a higher layer according to the sequence number information of the discarded PDCP SDUs.

12. The apparatus according to claim 11, wherein,
the sequence number information includes a COUNT value of a first PDCP SDU in discarded consecutive PDCP SDUs and the number of the discarded consecutive PDCP SDUs; or
the sequence number information includes a COUNT value of a first PDCP SDU and a COUNT value of a last PDCP SDU in the discarded consecutive PDCP SDUs.

13. The apparatus according to claim 11, wherein,
the sequence number information is transmitted via a PDCP control PDU.

14. The apparatus according to claim 11, wherein,
the receiving device maintains the following four state variables:
a first state variable, which indicates a COUNT value of a first PDCP SDU that has not been delivered to a higher layer but is still waiting to be received;
a second state variable, which indicates a COUNT value of a next PDCP SDU expecting to be received;
a third state variable, which indicates a COUNT value of a first discarded PDCP SDU of a transmitting PDCP entity of a transmitting device; and
a fourth state variable, which indicates a COUNT value of a last discarded PDCP SDU of the transmitting PDCP entity of the transmitting device.

15. The apparatus according to claim 11, wherein that the second processing unit delivers the stored PDCP SDUs to a higher layer comprises that:
the second processing unit consecutively delivers SDUs with a COUNT value less than or equal to a fourth state variable in the stored PDCP SDUs to the higher layer, the fourth state variable indicating a COUNT value of a last discarded PDCP SDU of the transmitting PDCP entity of the transmitting device.

16. The apparatus according to claim 14, wherein the second processing unit further performs the following operations:
updating the third state variable to the COUNT value of the first PDCP SDU in the discarded consecutive PDCP SDUs; and
updating the fourth state variable to the COUNT value of the first PDCP SDU in the discarded consecutive PDCP SDUs plus the value of the number of discarded consecutive PDCP SDUs minus 1.

17. The apparatus according to claim 16, wherein,
if the third state variable is less than or equal to the first state variable and the first state variable is less than or equal to the fourth state variable, the second processing unit further performs at least one of the following operations:
delivering all stored PDCP SDUs to the higher layer in an ascending order of associated COUNT values after performing header decompression, until the COUNT value is less than or equal to the fourth state variable;
if the fourth state variable is less than the second state variable minus 1, delivering all stored PDCP SDUs with associated COUNT values having consecutive COUNT values starting from the fourth state variable+1 in an ascending order of the COUNT values to the higher layer;
updating the first state variable to the COUNT value of the first PDCP SDU that has not been delivered to the higher layer, wherein the COUNT value is greater than the first state variable; and
updating the second state variable to a maximum value between the first state variable and the first state variable before being updated.

18. The apparatus according to claim 17, wherein,
the receiving device further maintains a fifth state variable, the fifth state variable indicating a following COUNT value of a COUNT value associated with a PDCP data PDU triggering a reordering timer; and
the second processing unit further performs at least one of the following operations:
if the reordering timer is running and the first state variable is greater than or equal to the fifth state variable, stopping and resetting the reordering timer; and
if the reordering timer is not running and the first state variable is less than the second state variable, updating the fifth state variable to a value of the second state variable and starting the reordering timer.

19. The apparatus according to claim 15, wherein,
if the third state variable is equal to the first state variable, the second processing unit performs at least one of the following operations:
delivering all stored PDCP SDUs to the higher layer in an ascending order of associated COUNT values after performing header decompression, until the COUNT value is less than or equal to the fourth state variable;
if the fourth state variable is less than the second state variable minus 1, delivering all stored PDCP SDUs with associated COUNT values having consecutive COUNT values starting from the fourth state variable+1 in an ascending order of the COUNT values to the higher layer;
updating the first state variable to the COUNT value of the first PDCP SDU that has not been delivered to the higher layer, wherein the COUNT value is greater than the first state variable; and
updating the second state variable to a maximum value between the first state variable and the second state variable before being updated.

20. The apparatus according to claim 19, wherein,
the second processing unit performs the operations upon receiving a PDCP data PDU from a lower layer.
